# EUROPEAN PATENT APPLICATION

(11) **EP 4 729 413 A1**
(43) Date of publication of application: **22.04.2026**
(21) Application number: 25208515.4
(22) Date of filing: 14.10.2025
(51) Int. Cl.: B64D 11/00, B64D 45/00

(54) **PROJECTORS, AIRCRAFT PROJECTION SYSTEMS, AND METHODS FOR PROJECTING IMAGES**

(30) Priority: 21.10.2024 CN 202411471541
(71) Applicant: The Boeing Company, Arlington, VA 22202 (US)
(72) Inventor: DONG, Zhongzhe, Arlington, 22202 (US); LIU, Weiqiang, Arlington, 22202 (US); VANDEWALL, Cynthia Anne, Arlington, 22202 (US); HETTICK, Lawrence Dean, Arlington, 22202 (US); MO, Jiao, Arlington, 22202 (US); MA, Ke, Arlington, 22202 (US); Huiyi, HUANG, Arlington, 22202 (US)
(74) Representative: St Clair Jones, Gregory Arthur Langley

(57) **Abstract**

A projector includes a housing, a display controller, a display engine, and a drive assembly. The display controller is coupled to the housing. The display engine is enclosed in the housing and is coupled to the display controller. The drive assembly is coupled to the housing and is configured to selectively position the housing.

## Description

### FIELD

The present disclosure relates generally to image projectors and, more particularly, to projectors and projection systems for aircraft and methods for projecting images on aircraft interiors.

### BACKGROUND

Screen displays are widely used in commercial aircraft. Various in-flight entertainment (IFE) is also widely adopted by airlines for longer air travel. However, existing screen display and IFE systems have various drawbacks: Conventional display and IFE systems are expensive, in terms of material costs, workload, installation time, and power consumption. Conventional screen-based systems are also heavy. For example, the weight of conventional IFE systems can range from 800 to 1,200 pounds per aircraft, resulting in undesirable fuel consumption and CO2 emissions. Conventional screen-based systems may also become outdated early in the service life of the aircraft. Additionally, conventional IFE systems are limited to display at a fixed position. As such, the display location cannot be adjusted, resulting limited application and often a suboptimal viewing experience. Further, conventional IFE systems have limited or no capability to provide an interactive experience. Accordingly, those skilled in the art continue with research and development efforts in the field of interior image projection for aircraft cabins.

### SUMMARY

Disclosed are examples of a projector, a projection system for an aircraft, an aircraft, and a method for projecting images. The following is a non-exhaustive list of examples, which may or may not be claimed, of the subject matter according to the present disclosure.

In an example, the disclosed projector includes a housing, a display controller, a display engine, and a drive assembly. The display controller is coupled to the housing. The display engine is enclosed in the housing and is coupled to the display controller. The drive assembly is coupled to the housing and is configured to selectively position the housing.

In an example, the disclosed projection system includes a projector and a projection surface that is arranged within an interior of an aircraft. The projector includes a housing, a display controller, a display engine, and a drive assembly. The housing is coupled to a host mechanism of the aircraft. The display controller is coupled to the housing. The display engine is enclosed by the housing. The drive assembly is configured to selectively position the housing relative to the projection surface.

In an example, the disclosed aircraft includes an interior and a projection system. The projection system includes a projector and a projection surface that is arranged within the interior of the aircraft. The projector includes a housing, a display controller, a display engine, and a drive assembly. The housing is coupled to a host mechanism of the aircraft. The display controller is coupled to the housing. The display engine is enclosed by the housing. The drive assembly is configured to selectively position the housing relative to the projection surface.

In an example, the disclosed method includes steps of: (1) selecting at least one of one or more projection surfaces to display one or more of images; (2) generating the one or more images using a display engine enclosed in a housing; (3) rotating the housing about at least one axis relative to a host mechanism of the aircraft using a drive assembly to direct the one or more images on the at least one of the one or more projection surfaces; and (4) projecting the one or more images onto the at least one of the one or more projection surfaces using the display engine.

Other examples of the projector, the projection system, the aircraft, and the method will become apparent from the following detailed description, the accompanying drawings, and the appended claims.

### BRIEF DESCRIPTION OF THE DRAWINGS

Figs. 1A and 1B, collectively referred to herein as Fig. 1, is a schematic block diagram of an example of a projection system for an aircraft;
Fig. 2 is a flow diagram of an example of a method for projecting images;
Fig. 3 is a schematic, perspective view of an example of a projector;
Fig. 4 is a schematic, perspective view of an example of the projector;
Fig. 5 is a schematic, perspective, exploded view of an example of the projector;
Fig. 6 is a schematic illustration of an example of an interior of an aircraft;
Fig. 7 is a schematic, perspective view of an example of a host mechanism for the projector in the interior of the aircraft;
Fig. 8 is a schematic illustration of an example image projection of the projector;
Fig. 9 is a schematic illustration of an example image projection of the projector;
Fig. 10 is a schematic illustration of an example image projection of the projector;
Fig. 11 is an illustration of an example image projected by the projector on an example projection surface;
Fig. 12 is an illustration of an example image projected by the projector on an example projection surface;
Fig. 13 is an illustration of an example image projected by the projector on an example projection surface;
Fig. 14 is an illustration of an example image projected by the projector on an example projection surface;
Fig. 15 is an illustration of an example image projected by the projector on an example projection surface;
Fig. 16 is an illustration of an example image projected by the projector on an example projection surface;
Fig. 17 is a schematic illustration of an example of an aircraft; and
Fig. 18 is a flow diagram of an example of an aircraft manufacturing and service method.

### DETAILED DESCRIPTION

Disclosed herein are examples of projectors, projection systems, and methods that advantageously enable cabin digitalization and interactive passenger experiences for commercial aircraft. Examples of the projectors, projection systems, and methods advantageously enable cabin digitalization in interactive ways that improve cabin management efficiency. Examples of the projectors, projection systems, and methods advantageously provide automated projection displays capable of replacing multiple cabin functions, such as reading lights, cabin information displays, in-light entertainment (IFE) systems, and the like. Examples of the projectors, projection systems, and methods advantageously achieve weight reduction and power saving over existing cabin IFE and display devices. Examples of the projectors, projection systems, and methods advantageously expand display applications, such as digital advertising and cabin branding on various projection surfaces on an interior of the aircraft. Examples of the projectors, projection systems, and methods advantageously provide new capabilities within the cabin for wayfinding and communication. Other advantages of the projectors, projection systems, and methods disclosed herein include creating a cabin differentiator with rich scenarios for commercial aircraft, enabling substantial potentials to save weight, space, and power consumption, improving cabin management efficiency and in-flight experience (e.g., navigation, interactive display etc.), introducing digital channels in cabin for airline's ancillary revenue (e.g., shopping, advertising, etc.), customizing the user interface and content storyline for airline branding, enabling cabin sensing to detect passenger's needs, among other benefits.

In various examples, the projectors, projection systems, and methods, disclosed herein, provide a compact design for a plug and play, small, lightweight projection system that enables versatile displays in the cabin of aircraft. In various examples, the projectors, projection systems, and methods utilize one or more micro-projectors for imaging, one or more sensor modules for interaction detection and gestural control, two rotational drive mechanisms for stabilization and display location, and an associated control module. Examples of the projectors, projection systems, and methods can be embedded in a ceiling, a passenger service unit, or other suitable touchpoints to enable interactive cabin management, navigation, branding, advertising, and entertainment in different areas of the aircraft. Examples of the projectors, projection systems, and methods facilitate interactive services to multiple passengers simultaneously. Examples of the projectors, projection systems, and methods achieve significant weight reduction, power saving, and display flexibility compared to the existing display solutions.

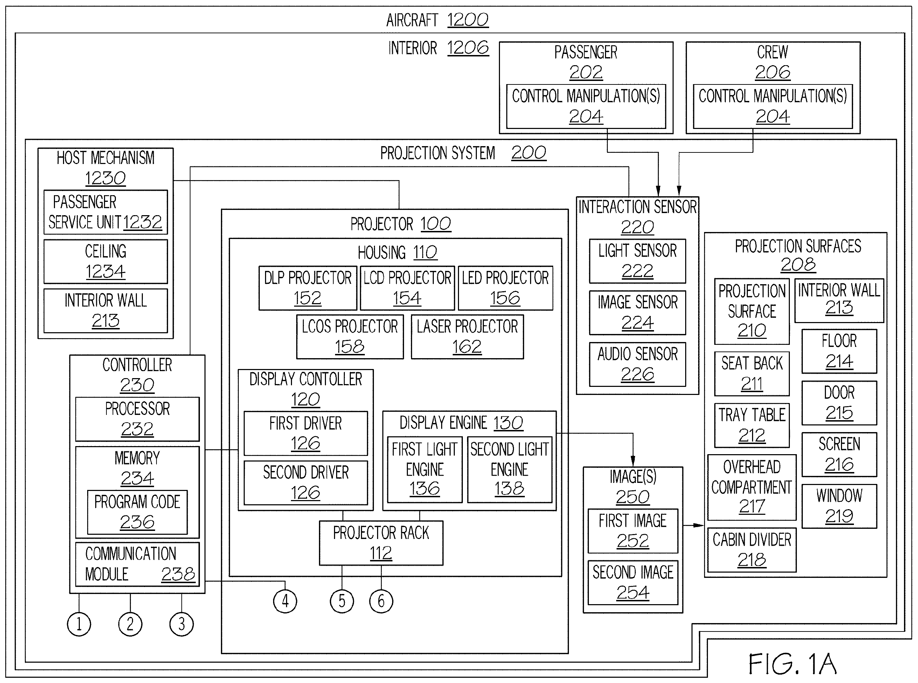

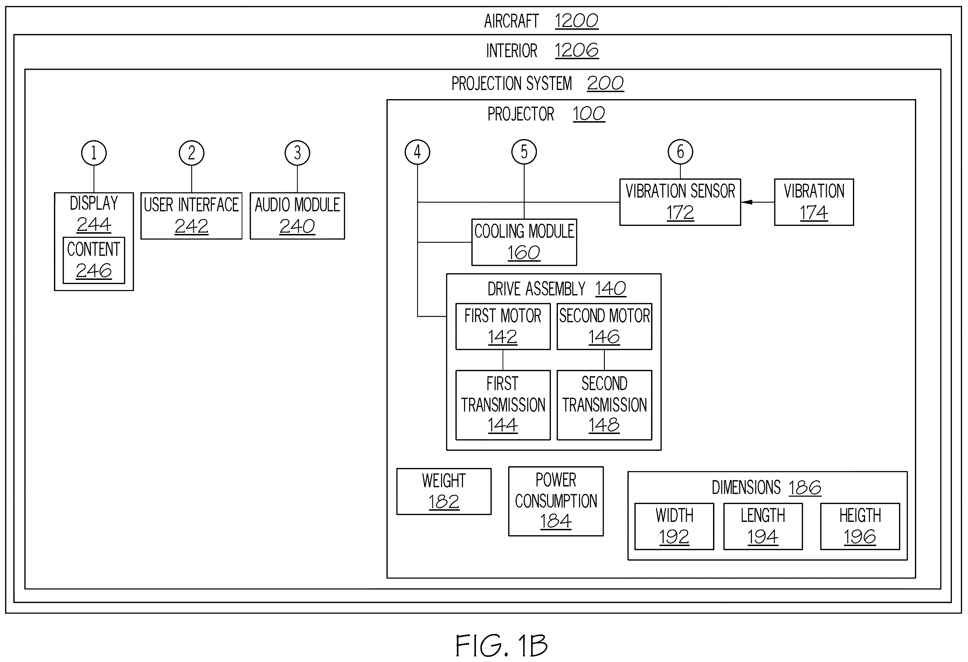

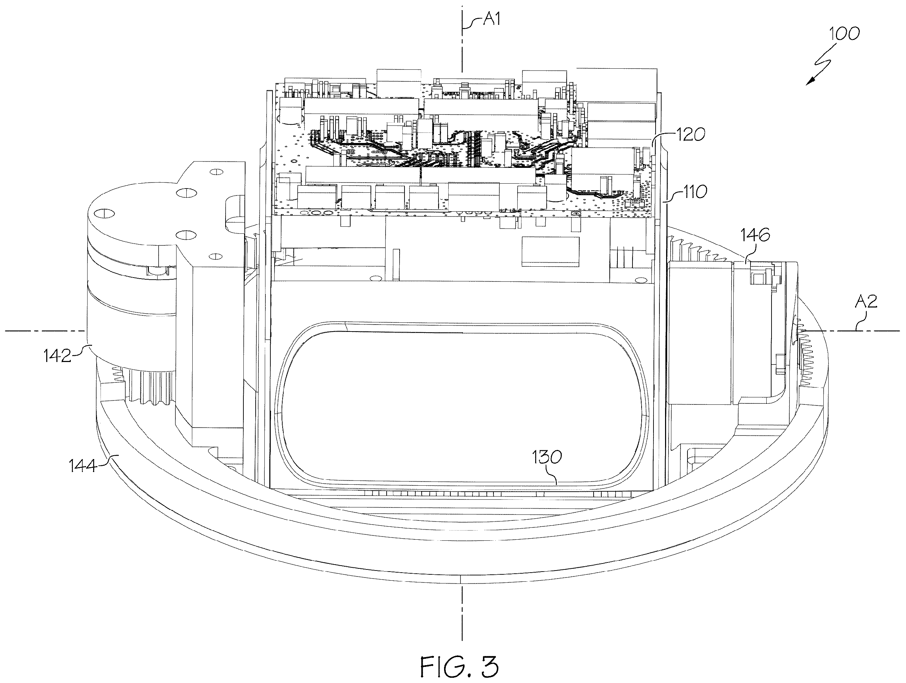

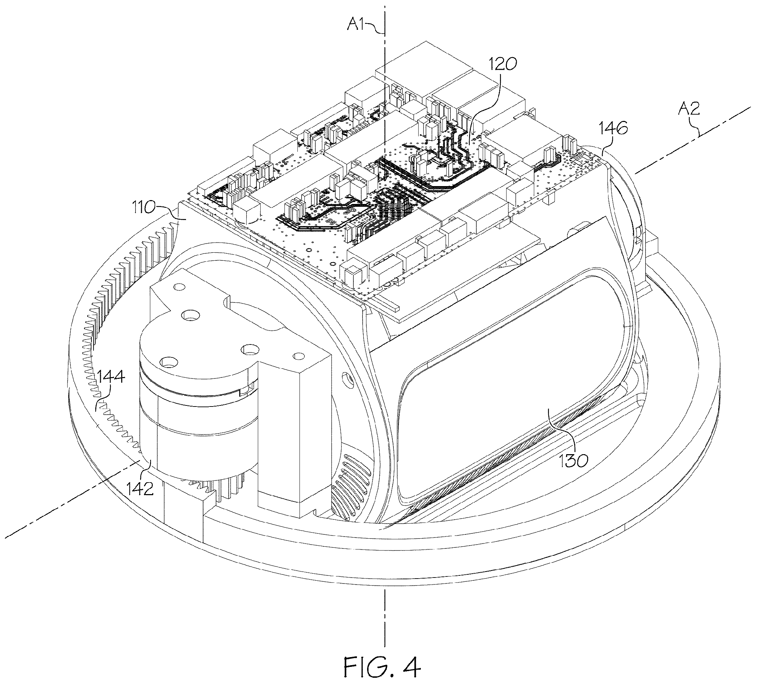

Referring now to Figs. 1 and 3-16 by way of examples, the present disclosure is directed to a projector 100. The following are examples of the projector 100, according to the present disclosure. Examples of the projector 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

In one or more examples, the projector 100 includes a housing 110. The housing 110 serves as an enclosure that protects and organizes the various electronic and/or mechanical components of the projector 100. The housing 110 enables the image projecting components of the projector 100 to be angularly oriented or otherwise positioned such that images 250 generated and projected by the projector 100 are directed toward and displayed on a projection surface 210 as desired. The housing 110 also protects the internal components from environmental factors such as dust, moisture, electromagnetic interference, and physical damage. In one or more examples, the housing 110 assists with managing heat dissipation.

In one or more examples, the projector 100 includes a display controller 120. The display controller 120 is coupled to the housing 110. As an example, the display controller 120 is arranged within or is at least partially enclosed by the housing 110. Generally, the display controller 120 acts as the control system for the projector 100 and ensures a light source for the projector 100 functions correctly and efficiently, contributing to the overall image quality and lifespan of the projector 100.

In one or more examples, the projector 100 includes a display engine 130. In one or more examples, at least a portion of the display engine 130 is enclosed in the housing 110. The display engine 130 is coupled to the display controller 120. The display engine 130 is coupled to and is in electrical communication with the display controller 120. The operation and functionality of the display engine 130 is controlled by the display controller 120. The display engine 130 generates and projects the images 250 onto the projection surface 210. The display engine 130 is configured to utilize any one of various technologies to process an input signal (e.g., video or graphics) and use light to project the images 250.

As illustrated in Figs. 1, 9 and 10, in one or more examples, the display engine 130 is configured for simultaneously projecting a plurality of the images 250. In one or more examples, at least one of the images 250 is different than at least another one of the images 250. In one or more examples, each one of the images 250 is different. In one or more examples, at least two of the images 250 are the same. In one or more examples, the display engine 130 includes any number of light engines and any number of associated drivers.

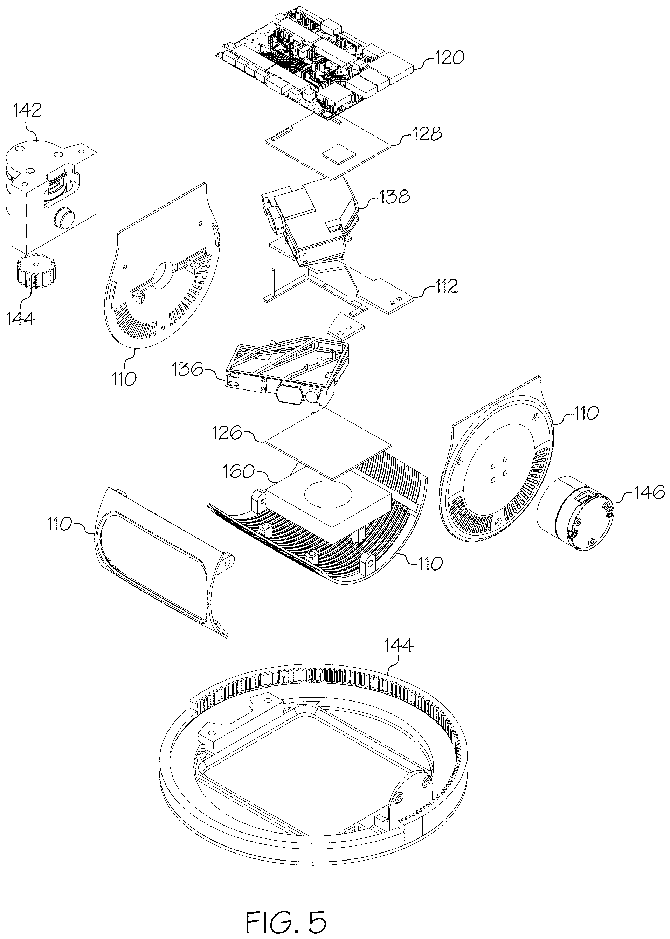

As illustrated in Figs. 1 and 5, in one or more examples, the display engine 130 includes a first light engine 136. The first light engine 136 is configured for generating and emitting or projecting a first image 252. In these examples, the display controller 120 includes a first driver 126 (e.g., a first light-engine driver). The first driver 126 is coupled to and is in electrical communication with the first light engine 136.

As illustrated in Figs. 1 and 5, in one or more examples, the display engine 130 includes a second light engine 138. The second light engine 138 is configured for generating and emitting or projecting a second image 254. In these examples, the display controller 120 includes a second driver 128 (e.g., a second light-engine driver). The second driver 128 is coupled to and is in electrical communication with the second light engine 138.

In one or more examples, the display engine 130, such as the first light engine 136 and/or the second light engine 138, include a combination of functional components, such as a light source, a number of optical components, a number of imaging components or modules, a color wheel, color filters, projections lenses, and the like. The light source is configured for generating the light needed for image projection. In one or more examples, the light source includes a lamp, light emitting diodes (LED), lasers, or other suitable means of illumination. The optical components guide and shape the light generated by the light source and direct the light through the imaging components of the display engine 130. The optical components include lenses (e.g., condensing, shaping, etc.), mirrors, prisms (e.g., separating, combining, etc.), and the like. The imaging components or modules can vary depending on the imaging technology utilized by the display engine 130, such as liquid crystal display (LCD), digital light processing (DLP), light emitting diode (LED), liquid crystal on silicon (LCoS), laser display, and the like. In various examples, light generated by the light source is passed through a color wheel or filter or separate light sources are used for different primary colors. In either case, the colors are recombined to form the images 250 in full color. After the images 250 are created, the images 250 are passed through a lens that focuses the images 250 on the projection surface 210. In one or more examples, such as in a DLP projector, the display engine 130 (e.g., the first light engine 136, the second light engine 138, third light engine, etc.), includes a digital micromirror device (DMD).

In one or more examples, the display controller 120, such as the first driver 126 and/or the second driver 128, take the form of an electronic control system or circuit that powers and regulates the light engines (e.g., first light engine 136 and/or second light engine 138) of the display engine 130. The display controller 120, such as the first driver 126 and/or the second driver 128, ensures that the light source (e.g., LEDs, lasers, or lamps) of the display engine 130 operates at a correct voltage, current, and brightness level to optimize image quality. Generally, the display controller 120, such as the first driver 126, the second driver 128, and any other light-engine driver, perform various functions including, but not limited to, power regulation, brightness control, color management, thermal management, timing and synchronization, and communication.

As illustrated in Fig. 1, in one or mor examples, the projector 100 (e.g., display engine 130 and display controller 120) includes or takes the form of a digital light processing projector 152 (DLP projector). In one or mor examples, the projector 100 (e.g., display engine 130 and display controller 120) includes or takes the form of a liquid crystal display projector 154 (LCD projector). In one or mor examples, the projector 100 (e.g., display engine 130 and display controller 120) includes or takes the form of a light emitting diode projector 156 (LED projector). In one or mor examples, the projector 100 (e.g., display engine 130 and display controller 120) includes or takes the form of a liquid crystal on silicone projector 158 (LCoS projector). In one or mor examples, the projector 100 (e.g., display engine 130 and display controller 120) includes or takes the form of a laser projector 162 (LCoS projector).

As illustrated in Figs. 1 and 3-5, in one or more examples, the projector 100 includes a drive assembly 140. The drive assembly 140 is coupled to the housing 110. The drive assembly 140 is configured for selectively positioning the housing 110. Selective positioning of the housing 110 enables selective positioning of the images 250 generated and emitted by the display engine 130. In one or more examples, the drive assembly 140 is configured to rotate the housing 110 about at least one axis.

As illustrated in Figs. 1 and 3-5, in one or more examples, the drive assembly 140 includes a first motor 142 and a first transmission 144. The first motor 142 acts as one mechanism that enables movement or positioning of the housing 110 about a first axis A1. The first transmission 144 is configured for transferring motion from the first motor 142 to the housing 110 for rotating the housing 110 about the first axis A1. The first motor 142 converts electrical energy into mechanical motion. The first motor 142 includes any suitable type of motor, for example, depending on the application. Examples of the first motor 142 include a direct current (DC) motor, a stepper motor, a servo motor, and the like. The first transmission 144 serves as a mechanical linkage between the first motor 142 and the housing 110 that translates the rotational motion of the first motor 142 into rotational and/or linear motion of the housing 110. In one or more examples, the first transmission 144 is also configured for adjusting the speed and/or torque of the motion. Examples of the first transmission 144 include a gear train, lead screw, a belt drive or the like, depending on the type of movement needed.

In the illustrated example, the first motor 142 includes a brushless DC motor. The first transmission 144 includes an annular gear assembly, for example, that includes a ring gear or disk gear that is coupled to the housing 110 and a drive gear that is coupled to an output shaft of the first motor 142 and engages the ring gear. In one or more examples, the housing 110 also includes a rotating disk and/or bearings that enable movement of the housing 110 relative to a host mechanism 1230 to which it is coupled.

As illustrated in Figs. 1 and 3-5, in one or more examples, the drive assembly 140 includes a second motor 146 and a second transmission 148. The second motor 146 acts as one mechanism that enables movement or positioning of the housing 110 about a second axis A2. The second transmission 148 is configured for transferring motion from the second motor 146 to the housing 110 for rotating the housing 110 about the second axis A2. The second motor 146 converts electrical energy into mechanical motion. The second motor 146 includes any suitable type of motor, for example, depending on the application. Examples of the second motor 146 include a direct current (DC) motor, a stepper motor, a servo motor, and the like. The second transmission 148 serves as a mechanical linkage between the second motor 146 and the housing 110 that translates the rotational motion of the second motor 146 into rotational and/or linear motion of the housing 110. In one or more examples, the second transmission 148 is also configured for adjusting the speed and/or torque of the motion. Examples of the first transmission 144 include a gear train, lead screw, a belt drive or the like, depending on the type of movement needed.

In the illustrated example, the second motor 146 includes a brushless DC motor. The second transmission 148 includes a direct drive connection between the second motor 146 and the housing 110 for rotation about the second (e.g., horizontal) axis A2 for vertical movement and positioning of the images 250. In these examples, a rotary bearing is coupled to the housing 110 on an opposite side of the directly coupled second motor 146.

In other examples, the second transmission 148 can include an annular gear assembly, for example, that includes a ring gear or disk gear that is coupled to the housing 110 and a drive gear that is coupled to an output shaft of the second motor 146 and engages the ring gear. In one or more examples, the housing 110 also includes a rotating disk and/or bearings that enable movement of the housing 110 relative to the host mechanism 1230 to which it is coupled.

In one or more examples, the first axis A1 and the second axis A2 intersect and are perpendicular. In the illustrated examples, the first axis A1 is an at least approximately vertical axis such that the first motor 142 and the first transmission 144 rotate the housing 110 in a generally horizontal plane. In the illustrated examples, the second axis A2 is an at least approximately horizontal axis such that the second motor 146 and the second transmission 148 rotate the housing 110 in a generally vertical plane.

As illustrated in Figs. 1 and 5, in one or more examples, the projector 100 includes a cooling module 160. The cooling module 160 is coupled to the housing 110. In one or more examples, at least a portion of the cooling module 160 is situated within or is enclosed by the housing 110. The cooling module 160 is configured for cooling (e.g., removing heat from) functional components of the projector 100, such as the display engine 130. The cooling module 160 includes any suitable active or passive cooling mechanism. Examples of the cooling module 160 include a cooling fan, a heat sink, a heat pipe, a solid-state active cooling mechanism (e.g., Peltier cooler of thermoelectric cooler), and the like.

As illustrated in Figs. 1 and 3-5, in one or more examples, the projector 100 includes a projector rack 112. The projector rack 112 is coupled to the housing 110. In one or more examples, at least a portion of the projector rack 112 is situated in the housing 110. The display controller 120 and the display engine 130 are coupled to and supported by the projector rack 112. In other examples, other internal functional components of the projector 100 are coupled to and/or supported by the projector rack 112. Generally, the projector rack 112 provides an underlying mounting structure for the internal components of the projector 100 located within the housing 110.

As illustrated in Fig. 1, in one or more examples, the projector 100 includes a vibration sensor 172. The projector 100 can include any number of instances of the vibration sensor 172 (e.g., a plurality of vibration sensors) depending on application or need. The vibration sensor 172 is configured for detecting vibrations 174 experienced by the housing 110. The vibration sensor 172 includes any suitable device used to measure vibration or oscillation of an object, such as vibration transducers, accelerometers, and the like. Examples of the vibration sensor 172 include, but are not limited to, accelerometers, gyroscopes, piezoelectric vibration sensors, capacitive vibration sensors, piezo-resistive vibration sensors, strain gauge vibration sensors, laser doppler vibrometers (LDVs), eddy current vibration sensors, optical vibration sensors, and the like.

In these examples, the drive assembly 140 is further configured for compensating for the vibrations 174 as detected by the vibration sensor 172. In these examples, the drive assembly 140 is configured for reacting to the vibrations 174 and serves to stabilize the images 250 being projected. In one or more examples, the first motor 142 and the second motor 146 operated in tandem or coordination to counter the vibrations and stabilize the housing 110 and, thus, the images 250 projected by the projector 100.

As illustrated in Figs. 1 and 3-5, in one or more examples, the projector 100 includes a controller 230. In one or more examples, the controller 230 is coupled to and is in electrical communication with the display controller 120 and provides operational and functional instructions to the display controller 120 for control of the display engine 130. In one or more examples, the controller 230 is coupled to and is in electrical communication with the drive assembly 140 and provides operation and functional instructions to the drive assembly 140 for control of movement of the housing 110. In one or more examples, the controller 230 is coupled to and is in electrical communication with the vibration sensor 172 and provides operation and functional instructions to the drive assembly 140 for stabilization of the housing 110 in response to the vibration 174 detected by the vibration sensor 172. In one or more examples, the controller 230 is coupled to and is in electrical communication with the cooling module 160 and provides operation and functional instructions to the cooling module 160 for active cooling of the projector 100 during operation.

As illustrated in Fig. 1, in one or more examples, the projector 100 includes a number of specifications, including weight 182, power consumption 184, and dimensions 186. The specifications of the projector 100 facilitate various space, weight, and power consumption advantages over conventional display systems. In one or more examples, the weight 182 of the projector 100 is less than approximately 500 grams. In one or more examples, the weight 182 of the projector 100 is less than approximately 485 grams. In one or more examples, the weight 182 of the projector 100 is approximately 480 grams. In one or more examples, the power consumption 184 of the projector 100 is between 35 Watts and 55 Watts. In one or more examples, the projector 100, such as the housing 110, includes a width 192 of approximately 154 millimeters, a length 194 of approximately 154 millimeters, and a height 196 of approximately 84 millimeters.

Referring now to Figs. 1 and 3-16, by way of examples, the present disclosure is directed to a projection system 200 for an aircraft 1200. The following are examples of the projection system 200, according to the present disclosure. Examples of the projection system 200 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

In one or more examples, the projection system 200 includes at least one instance of the projector 100. The projection system 200 includes at least one instance of a projection surface 210. The projection system 200 can include any number of projection surfaces 208. The projection surface 210 is arranged within an interior 1206 of the aircraft 1200. The projector 100 includes the housing 110. The housing 110 is coupled to a host mechanism 1230 of the aircraft 1200. The projector 100 includes the display controller 120 that is coupled to the housing 110. The projector 100 includes the display engine 130 that is at least partially enclosed by the housing 110. The projector 100 includes the drive assembly 140 that is configured for selectively positioning the housing 110 relative to the projection surface 210 and/or the host mechanism 1230.

As illustrated in Fig. 1, in one or more examples, the projection system 200 includes an interaction sensor 220. The interaction sensor 220 is configured for detecting control manipulations 204, such as from a passenger 202 or crew 206 of the aircraft 1200. The interaction sensor 220 enables the passenger 202 and/or crew 206 to interact with the controller 230 and provide operational and/or functional instructions to the projector 100 using a number of control manipulations 204. The control manipulations 204 include any number of various motions, gestures, or other interactions that can be visibly or audibly detected and by the interaction sensor 220 and interpreted by the controller 230.

As illustrated in Fig. 1, in one or more examples, the projection system 200 includes the controller 230. The controller 230 is coupled to and is in electrical communication with the interaction sensor 220. The controller 230 is configured for processing and interpreting signals generated by the interaction sensor 220 and converting the signals into operational or function instructions for the projector 100.

As illustrated in Fig. 1, in one or more examples, the interaction sensor 220 includes a light sensor 222. The light sensor 222 includes any suitable device that detects light and converts the light into electrical signals that can be processed and interpreted by the controller 230 as instructions for the projector 100. Examples of the light sensor 222 include infrared (IR) sensors, optical position sensors, and the like.

As illustrated in Fig. 1, in one or more examples, the interaction sensor 220 includes an image sensor 224. The image sensor 224 includes any suitable device that detects light and converts the light into an image that can be processed and interpreted by the controller 230 as instructions for the projector 100. Examples of the image sensor 224 include cameras, charge-coupled devices (CCD), complementary metal-oxide-semiconductors (CMOS) sensors, light detection and ranging (LiDAR) sensors, and the like.

As illustrated in Fig. 1, in one or more examples, the interaction sensor 220 includes an audio sensor 226. The audio sensor 226 includes any suitable device that detects sound and converts the sound into electrical signals that can be processed and interpreted by the controller 230 as instructions for the projector 100. Examples of the audio sensor 226 include microphones, micro-electro-mechanical systems (MEMS) microphones, ultrasonic sensors, and the like.

As illustrated in Figs. 1 and 9-16, in one or more examples, the projection surface 210 or any one of the projection surfaces 208 include at least one of a seat back 211, a tray table 212, a wall 213, a floor 214, a door 215, a screen 216, an overhead compartment 217, a cabin divider 218, and a window 219. In one or more examples, the projection surface 210 or any of the projection surfaces 208 include at least two of the seat back 211, the tray table 212, the wall 213, the floor 214, the door 215, the screen 216, the overhead compartment 217, the cabin divider 218, and the window 219. In other examples, the projection surface 210 can be any other suitable surface or object in the cabin of the aircraft 1200.

In one or more examples, the projector 100 is configured to simultaneously project a plurality of the images 250 on two or more of the projection surfaces 208. In one or more examples, at least one of the images 250 is different than at least another one of the images 250. In one or more examples, each one of the images 250 is different. In one or more examples, at least two of the images 250 are the same.

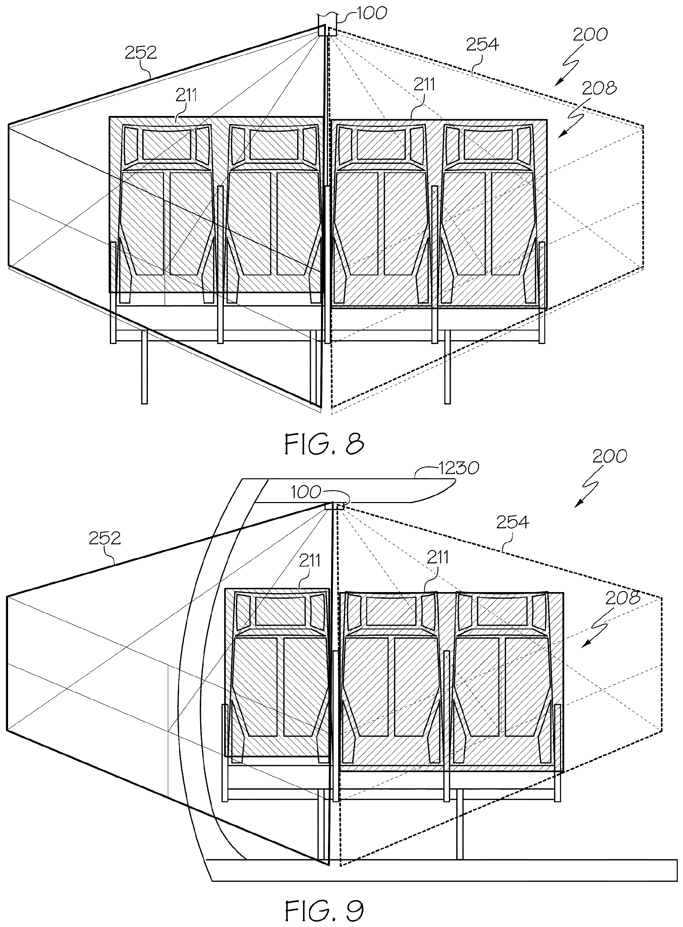

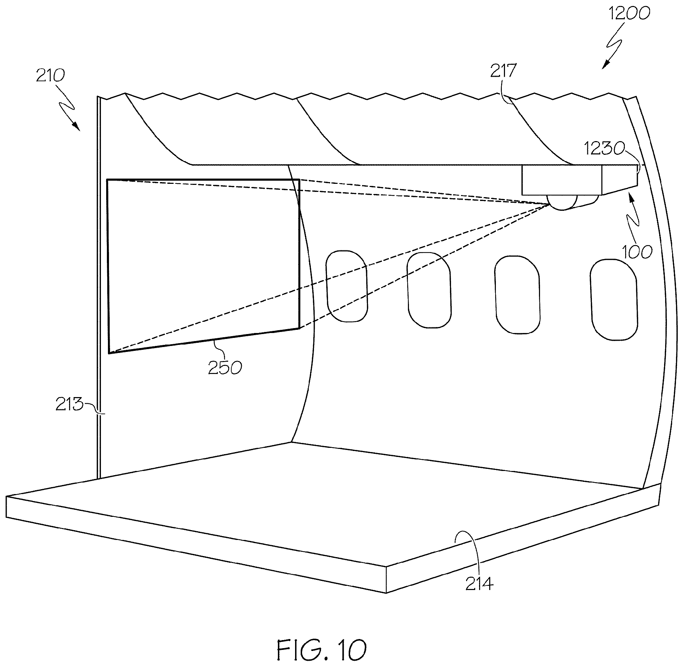

As illustrated in Fig. 9, in one or more examples, the projector 100 projects a first image 252 on a first set of projection surfaces, such as a first pair of seat backs and projects a second image 254 on a second set of projection surfaces, such as a first pair of seat backs. As illustrated in Fig. 10, in one or more examples, the projector 100 projects the first image 252 on one projection surface, such as a first seat back and projects the second image 254 on a set of projection surfaces, such as a pair of seat backs. In these examples, each of the images 250 projected by the projector 100 are intended for an individual passenger associated with each of the seat backs.

As illustrated in Fig. 10, in one or more examples, the projector 100 projects the image 250 on a projection surface, such as a wall, cabin divider, or screen. In these examples, the images 250 projected by the projector 100 are intended for a plurality of passengers having a view of the wall, cabin divider, or screen.

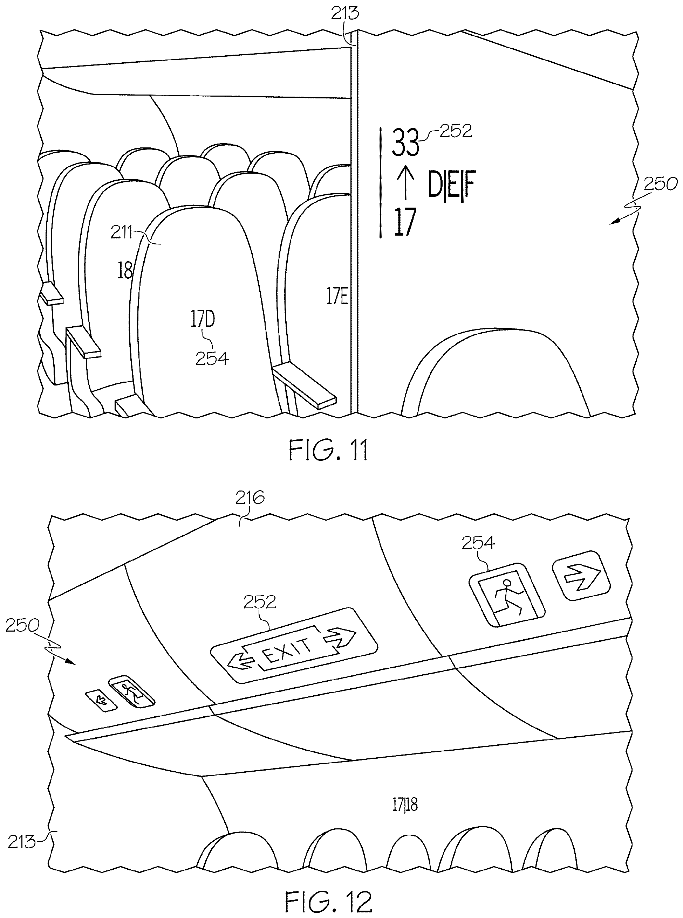

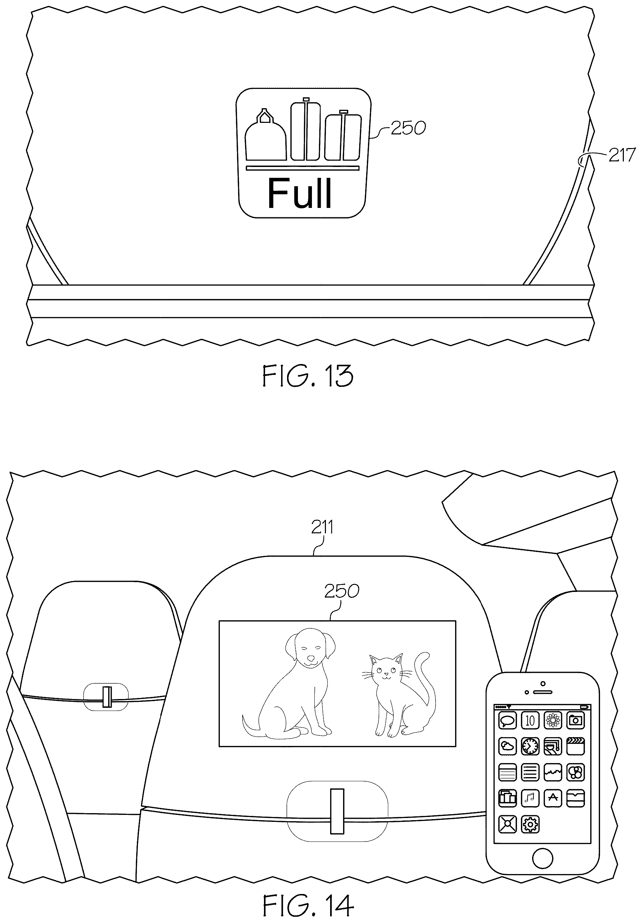

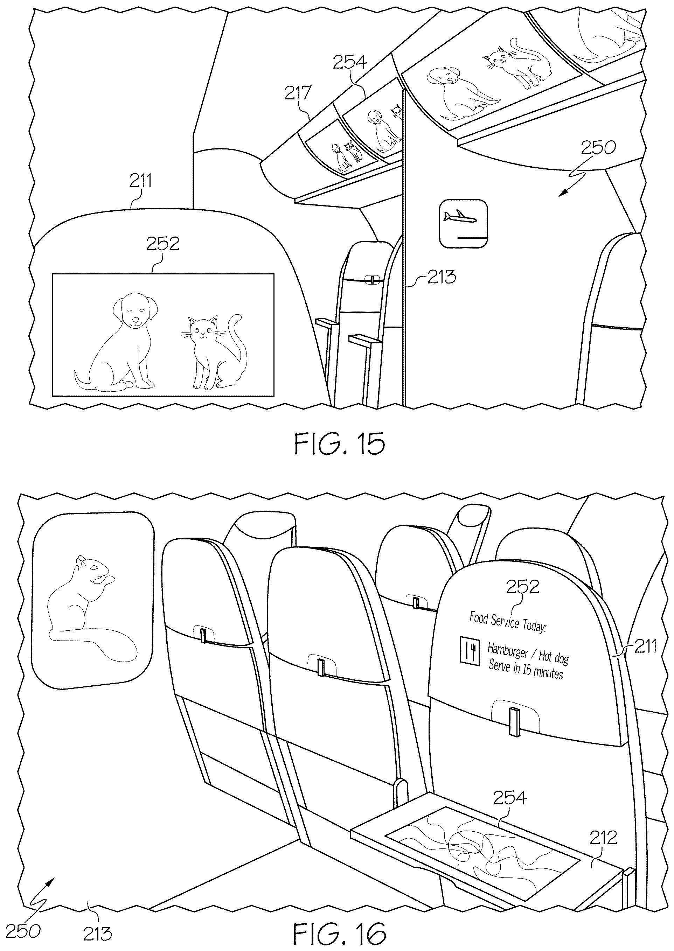

Figs. 11-16 illustrate various examples of the type, content, information, etc. included by the images 250 projected by the projector 100. As illustrated in Fig. 11, in one or more examples, the images 250 can include seat identification information projected on seat backs and flight identification information projected on a wall or cabin divider. In these examples, seat numbers being displayed on seatbacks assist passengers finding their seat quickly during boarding. As illustrated in Fig. 12, in one or more examples, the images 250 can include flight safety information or instructions, such as directions to the exit, lavatories, etc. projected on the overhead compartments. As illustrated in Fig. 13, in one or more examples, the images 250 can include status information projected on the overhead compartments, such as indications of fullness of the overhead compartments. As illustrated in Figs. 14 and 15, in one or more examples, the images 250 can include in-flight entertainment, such as videos or games, projected on the seatbacks and/or overhead compartments. As illustrated in Fig. 16, in one or more examples, the images 250 can include service information, such as food choice, projected on the seatback and images representing the food choice or an interactive menu projected on the tray table. Any number of different types of images 250 containing any desired information projected on any combination of the projection surfaces 208 are possible. In any of these examples, the images 250 are dynamic and can be changed throughout the flight or operations scenario of the aircraft 1200.

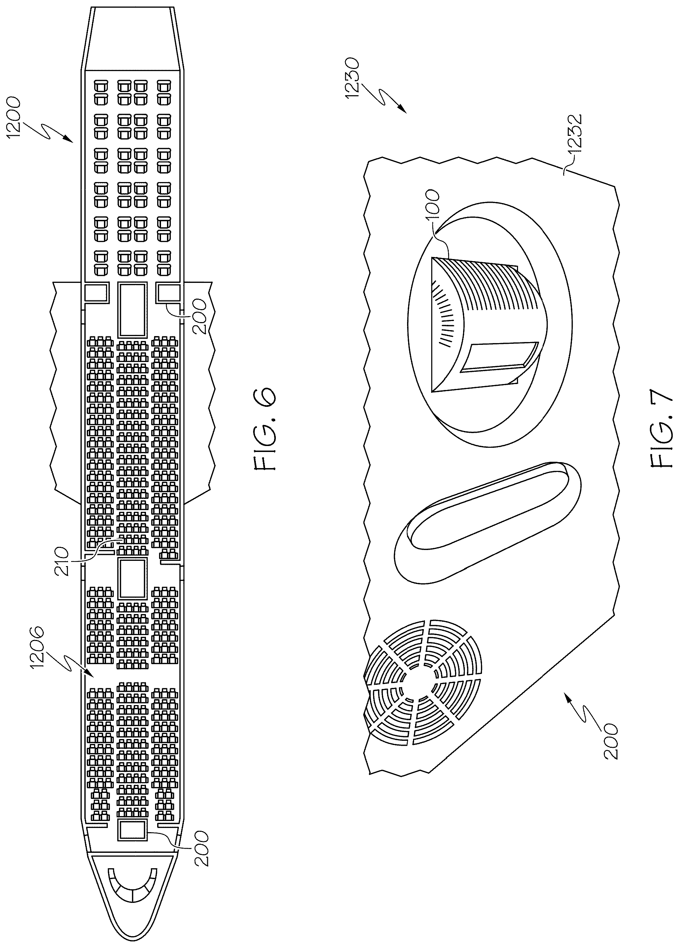

As illustrated in Figs. 1 and 6, in one or more examples, the projection system 200 can include any number of instances of the projector 100 and any number of the projection surfaces 208. Instances of the projector 100 can be situated throughout the interior 1206 of the aircraft 1200. Each instance of the projector 100 is coupled to, supported by, or is otherwise associated with the host mechanism 1230. As illustrated in Figs. 1 and 7, in one or more exam includes or takes the form a passenger service unit 1232 of the aircraft 1200. As illustrated in Fig. 1, in one or more examples, the host mechanism 1230 includes or takes the form of a ceiling 1234 of the aircraft 1200. As illustrated in Fig. 1, in one or more examples, the host mechanism 1230 includes or takes the form of an interior wall (e.g., wall 213) of the aircraft 1200.

As illustrated in Fig. 1, in one or more examples, the controller 230 includes a processor 232, a memory 234, and program code 236 stored on the memory 234. The processor 232 is configured for executing the program code 236 to control at least one of the display engine 130, the display controller 120, the drive assembly 140, the cooling module 160, the vibration sensor 172, and the interaction sensor 220.

As illustrated in Fig. 1, in one or more examples, the projection system 200 includes a user interface 242. The user interface 242 is configured for interacting with the controller 230. As an example, the user interface 242 enables the crew 206 to interact with the controller 230 and provide operational and/or functional instructions to the projector 100. As another example, the user interface 242 enables the passenger 202 to interact with the controller 230 and provide operational and/or functional instructions to the projector 100.

As illustrated in Fig. 1, in one or more examples, the projection system 200 includes a display 244. The display 244 is configured for displaying content 246. In one or more examples, the display 244 visually presents the user interface 242 to the passenger 202 and/or the crew 206. In one or more examples, the display 244 visually presents system performance controls.

As illustrated in Fig. 1, in one or more examples, the projection system 200 includes a communication module 238. The communication module 238 is coupled to and is in electrical communication with the controller 230. The communication module 238 is configured for enabling communication between the projector 100 (e.g., controller 230) and other electronic devices or input devices, such as through wireless communication (e.g., Wi-Fi, Bluetooth, and the like) or wired communication.

As illustrated in Fig. 1, in one or more examples, the projection system 200 includes an audio module 240. The audio module 240 is coupled to and is in electrical communication with the controller 230. The audio module 240 is configured to transmitting sound or other audible signals, such as in coordination or association with the images 250 projected by the projector 100. Examples of the audio module 240 include speakers, headphones, and the like.

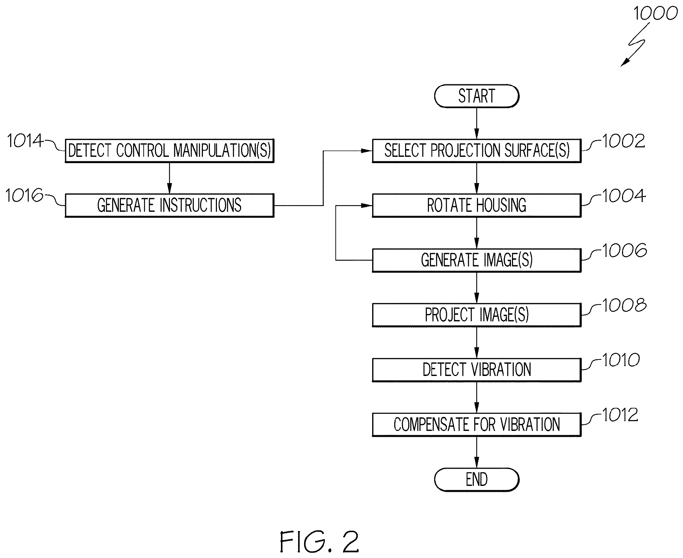

Referring now to Fig. 2, by way of examples, present disclosure is also directed to a method 1000 for projecting images 250 on one or more projection surfaces 208 on the aircraft 1200, also referred to herein as a projection method. The following are examples of the method 1000, according to the present disclosure. In one or more examples, the method 1000 is implemented using the projector 100 or the projection system 200 (Fig. 1). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of selecting 1002 at least one of one or more projection surfaces 208 to display one or more of the images 250. In one or more examples, the method 1000 includes a step of rotating 1004 the housing 110 about at least one axis relative to the host mechanism 1230 of the aircraft 1200 using the drive assembly 140 to direct the one or more images 250 on the at least one of the one or more projection surfaces 208. In one or more examples, the method 1000 includes a step of generating 1006 the one or more images 250 using the display engine 130 enclosed in the housing 110. In one or more examples, the housing 110 can be further rotated (e.g., adjusted) about at least one axis relative to the host mechanism 1230 using the drive assembly 140 to adjust the location of the images 250 and/or direct the one or more images 250 on a different one of the one or more projection surfaces 208. In one or more examples, the method 1000 includes a step of projecting 1008 the one or more images 250 onto the at least one of the one or more projection surfaces 208 using the display engine 130.

In one or more examples, the method 1000 includes a step of detecting 1010 vibration 174 experienced by the housing 110 using the vibration sensor 172. In one or more examples, the method 1000 includes a step of compensating 1012 for the vibration 174 using the drive assembly 140. Compensating for the vibration 174 stabilizes the images 250 projected on the projection surface 210.

In one or more examples, the method 1000 includes a step of detecting 1014 the control manipulations 204. In one or more examples, the control manipulations 204 are provided by the passenger 202 and/or the crew 206. In one or more examples, the control manipulations 204 are physical gestures or audible responses detected using the interaction sensor 220 and transmitted to the controller 230. In one or more examples, the control manipulations 204 are command inputs or signals that are transmitted or communicated (e.g., wireless or wired) to the controller 230 from a personal electronic device (e.g., smartphone), a flight attendant panel, and the like.

In one or more examples, the method 1000 includes a step of generating 1016 instructions for the projector 100 using the controller 230. In one or more examples, various operational and/or functional instructions are transmitted to the functional components of the projector 100, such as in response to the control manipulations 204.

Examples of the projector 100, the projection system 200, and the method 1000, described and illustrated herein, advantageously use projection technology that is significantly different from the screen display systems conventionally used in aircraft. Examples of the projector 100, the projection system 200, and the method 1000, can be much more efficient than traditional IFE systems for both weight reduction and power consumption saving. Examples of the projector 100, the projection system 200, and the method 1000 provide automated (e.g., robotic) control that enables flexible display capabilities at most locations and/or surfaces in the cabin of the aircraft. Examples of the projector 100, the projection system 200, and the method 1000 will improve cabin management efficiency. Examples of the projector 100, the projection system 200, and the method 1000 facilitate interactive display by using sensors to recognize interactive (e.g., gestural) control, which enhances passenger's inflight experience.

Examples of the projector 100, the projection system 200, and the method 1000, described and illustrated herein, provide a design that is lightweight and space saving. In one or more examples, most of the operational components of the projector 100 are integrated on a small rotatable circular disc forming a part of the drive assembly 140. The housing 110 is capable of being installed on or integrated with interior panel or other support structure of the cabin. In one or mor examples, the housing 110 and/or the drive assembly 140 includes flexible connectors (e.g., silicone or rubber dampers) that function for both fastening and passive vibration absorption. Use of the housing 110, the display controller 120, and the controller 230 enable the projector 100 to become a plug and play component. of the aircraft 1200. A horizontal rotation degree of freedom coupled with support structure using gears and vertical rotation degree of freedom drives the housing 110 of the projector 100. The two rotational degrees of freedoms are used for both display stabilization and to switch projection display areas. The projector rack 112 of the projector 100 is designed for positioning more than one instance of the display engine 130 with specific angles, integrating a main printed circuit board and other electronic devices in multiple layers relative to the housing 110, and structural support to the housing 110. In one or more examples, cooperation between the interaction sensor 220 and projector 100 for gestural control the display content as well as automated response to ambient changes.

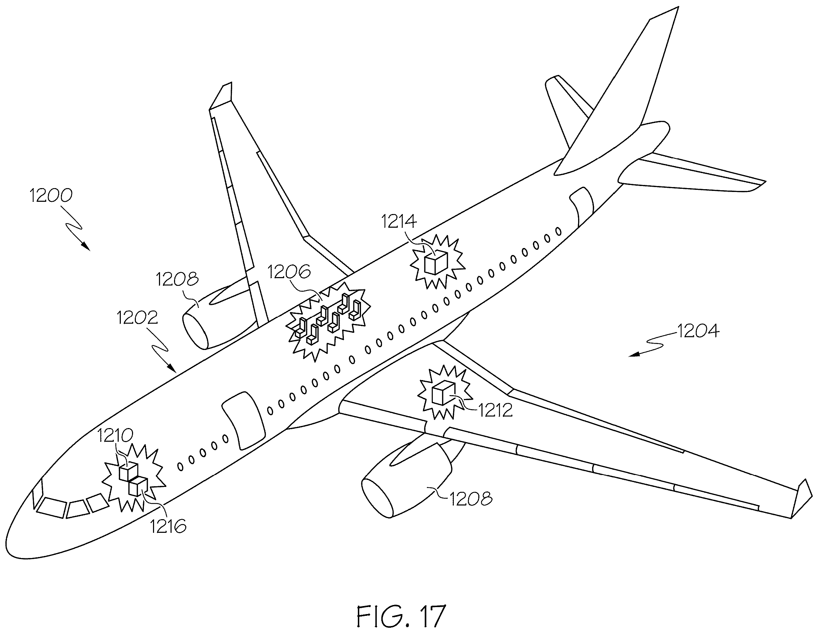

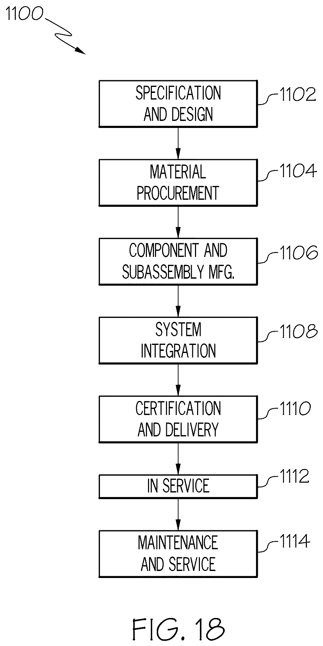

Examples of the projector 100, the projection system 200, and the method 1000, described herein, may be related to, or used in the context of, the aerospace manufacturing and service method 1100, as shown in Fig. 18 and an aircraft 1200, as shown in Fig. 17. As an example, the aircraft 1200 and/or the manufacturing and service method 1100 may include or utilize examples of the projector 100, the projection system 200, and/or the method 1000.

Fig. 17 illustrates an example of the aircraft 1200. While a commercial aircraft is illustrated by example, the aircraft 1200 can be any aerospace vehicle or platform. In one or more examples, the aircraft 1200 includes an airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like.

In one or more examples, the projector 100 and/or the projection system 200 form a part of or are examples of the passenger information/entertainment system. In one or more examples, the aircraft 1200 includes the projection system 200. The projection system 200 includes at least one instance of the projector 100 and at least one instance of the projection surface 210. The projection surface 210 is arranged within or is formed by the interior 1206 of the aircraft 1200. The projector 100 includes the housing 110 that is coupled to the host mechanism 1230 of the aircraft 1200. The projector 100 includes the display controller 120 that is coupled to the housing 110 and that is configured or adapted for controlling the display engine 130. The display engine 130 is enclosed by the housing 110 and is configured for generating and emitting one or more images 250 on the projection surface 210. The projector 100 includes the drive assembly 140 that is configured for selectively positioning the housing 110 relative to the projection surface 210 and/or relative to the host mechanism 1230.

Fig. 18 illustrates an example of the manufacturing and service method 1100. During pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 18 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the projector 100, the projection system 200, and the method 1000, shown and described herein, may be employed during any one or more of the stages of the manufacturing and service method 1100 shown in the flow diagram illustrated by Fig. 18. In an example, the aircraft 1200 includes the projector 100 or projection system 200 and/or displays images according to the method 1000 during a portion of component and subassembly manufacturing 1106 and/or system integration 1108. Further, the aircraft 1200 includes the projector 100 or projection system 200 and/or displays images according to the method 1000 while the aircraft 1200 is in service 1112. Also, the aircraft 1200 includes the projector 100 or projection system 200 and/or displays images according to the method 1000 during system integration 1108 and certification and delivery 1110. Similarly, the aircraft 1200 includes the projector 100 or projection system 200 and/or displays images according to the method 1000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-17, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-17, referred to above, need be included in every example and not all elements, features, and/or components described herein are necessarily depicted in each illustrative example. Accordingly, some of the elements, features, and/or components described and illustrated in Figs. 1 and 3-17 may be combined in various ways without the need to include other features described and illustrated in Figs. 1 and 3-17, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-17, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-17, and such elements, features, and/or components may not be discussed in detail herein with reference to each of Figs. 1 and 3-17. Similarly, all elements, features, and/or components may not be labeled in each of Figs. 1 and 3-17, but reference numerals associated therewith may be utilized herein for consistency.

In Figs. 2 and 18, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 18 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the method 1000, the method 2000, and the composite stringer package 200 have been shown and described, modifications may occur to those skilled in the art upon reading the specification. The present application includes such modifications and is limited only by the scope of the claims.

The description includes the following example clauses:
1. A projector comprising:
   a housing ;
   a display controller coupled to the housing ;
   a display engine enclosed in the housing and coupled to the display controller; and
   a drive assembly coupled to the housing and configured to selectively position the housing.
2. The projector of Clause 1, wherein the drive assembly is configured to rotate the housing about at least one axis.
3. The projector of Clause 1 or Clause 2, wherein the drive assembly comprises:
   a first motor; and
   a first transmission configured to transfer motion from the first motor to the housing for rotating the housing about a first axis.
4. The projector of Clause 3, wherein the drive assembly further comprises:
   a second motor; and
   a second transmission configured to transfer motion from the second motor to the housing for rotating the housing about a second axis.
5. The projector of Clause 4, wherein the first axis and the second axis intersect and are perpendicular.
6. The projector of any of Clauses 1 to 5, further comprising a cooling module situated in the housing.
7. The projector of any of Clauses 1 to 6, further comprising a projector rack situated in the housing, wherein the display controller and the display engine are supported by the projector rack.
8. The projector of any of Clauses 1 to 7, further comprising a vibration sensor configured to detect vibration experienced by the housing,
   wherein the drive assembly is further configured to compensate for the vibration.
9. The projector of any of Clauses 1 to 8, wherein the display engine comprises at least one of a digital light processing projector, a liquid crystal display projector, a light emitting diode projector, a liquid crystal on silicon projector, and a laser projector.
10. The projector of any of Clauses 1 to 9, wherein the display engine comprises:
   a first light engine configured to generate and project a first image;
   a first driver coupled to the first light engine;
   a second light engine configured to generate and project a second image; and
   a second driver coupled to the second light engine.
11. The projector of any of Clauses 1 to 10, wherein:
   the display engine is configured to simultaneously project a plurality of images; and
   at least one of the images is different than at least another one of the images .
12. The projector of any of Clauses 1 to 11, further comprising:
   a weight that is less than approximately 500 grams;
   a power consumption that is between 35 Watts and 55 Watts;
   a width of approximately 154 millimeters;
   a length of approximately 154 millimeters; and
   a height of approximately 84 millimeters.
13. A projection system for an aircraft, the projection system comprising:
   a projector; and
   a projection surface arranged within an interior of the aircraft,
   wherein the projector comprises:
      a housing coupled to a host mechanism of the aircraft;
      a display controller coupled to the housing;
      a display engine enclosed by the housing ; and
      a drive assembly configured to selectively position the housing relative to the projection surface.
14. The projection system of Clause 13, further comprising an interaction sensor configured to detect one or more control manipulations.
15. The projection system of Clause 13 or Clause 14, wherein the projection surface comprises at least one of a seat back, a tray table, an interior wall, a floor, a door, a screen, and an overhead compartment.
16. The projection system of any of Clauses 13 to 15, wherein the host mechanism comprises one of a passenger service unit, a ceiling, or a wall of the aircraft.
17. The projection system of any of Clauses 13 to 16, wherein the display engine comprises at least one of a digital light processing projector, a liquid crystal display projector, a light emitting diode projector, a liquid crystal on silicon projector, and a laser projector.
   17A. The projection system of any of Clauses 13 to 17, wherein the projector comprises or is the projector of any of Clauses 1 to 12.
18. A method for projecting images on one or more projection surfaces on an aircraft, the method comprising:
   selecting at least one of the one or more projection surfaces to display one or more of the images;
   generating the one or more of the images using a display engine enclosed in a housing;
   rotating the housing about at least one axis relative to a host mechanism of the aircraft using a drive assembly to direct the one or more of the images on the at least one of the one or more projection surfaces; and
   projecting the one or more of the images onto the at least one of the one or more projection surfaces using the display engine.
19. The method of Clause 18, further comprising:
   detecting vibration experienced by the housing using a vibration sensor; and
   compensating for the vibration using the drive assembly.
20. The method of Clause 18 or Clause 19, further comprising detecting control manipulations using an interaction sensor.
   20A. The method of any of Clauses 18 to 20, wherein the method is performed using the projector of any of Clauses 1 to 12 and/or the projection system of any of Clauses 13 to 17.

## Claims

1. A projector (100) comprising:
a housing (110);
a display controller (120) coupled to the housing (110);
a display engine (130) enclosed in the housing (110) and coupled to the display controller (120); and
a drive assembly (140) coupled to the housing (110) and configured to selectively position the housing (110).

2. The projector (100) of Claim 1, wherein the drive assembly (140) is configured to rotate the housing (110) about at least one axis.

3. The projector (100) of Claim 1 or Claim 2, wherein the drive assembly (140) comprises:
a first motor (142); and
a first transmission (144) configured to transfer motion from the first motor (142) to the housing (110) for rotating the housing (110) about a first axis (A1).

4. The projector (100) of Claim 3, wherein the drive assembly (140) further comprises:
a second motor (146); and
a second transmission (148) configured to transfer motion from the second motor (146) to the housing (110) for rotating the housing (110) about a second axis (A2), optionally, wherein the first axis (A1) and the second axis (A2) intersect and are perpendicular.

5. The projector (100) of any of Claims 1 to 4, further comprising a cooling module (160) situated in the housing (110).

6. The projector (100) any of Claims 1 to 5, further comprising a projector rack (112) situated in the housing (110), wherein the display controller (120) and the display engine (130) are supported by the projector rack (112).

7. The projector (100) of any of Claims 1 to 6, further comprising a vibration sensor (172) configured to detect vibration (174) experienced by the housing (110),
wherein the drive assembly (140) is further configured to compensate for the vibration (174).

8. The projector (100) of any of Claims 1 to 7, wherein the display engine (130) comprises at least one of a digital light processing projector (152), a liquid crystal display projector (154), a light emitting diode projector (156), a liquid crystal on silicon projector (158), and a laser projector (162).

9. The projector (100) of any of Claims 1 to 8, wherein the display engine (130) comprises:
a first light engine (136) configured to generate and project a first image (252);
a first driver (126) coupled to the first light engine (136);
a second light engine (138) configured to generate and project a second image (254); and
a second driver (128) coupled to the second light engine (138), and/or,
wherein:
the display engine (130) is configured to simultaneously project a plurality of images (250); and
at least one of the images (250 is different than at least another one of the images (250).

10. The projector (100) of any of Claims 1 to 9, further comprising:
a weight (182) that is less than approximately 500 grams;
a power consumption (184) that is between 35 Watts and 55 Watts;
a width of approximately 154 millimeters;
a length of approximately 154 millimeters; and
a height of approximately 84 millimeters.

11. A projection system (200) for an aircraft (1200), the projection system (200) comprising:
a projector (100); and
a projection surface (210) arranged within an interior (1206) of the aircraft (1200),
wherein the projector (100) comprises:
a housing (110) coupled to a host mechanism (1230) of the aircraft (1200);
a display controller (120) coupled to the housing (110);
a display engine (130) enclosed by the housing (110); and
a drive assembly (140) configured to selectively position the housing (110) relative to the projection surface (210).

12. The projection system (200) of Claim 11, further comprising an interaction sensor (220) configured to detect one or more control manipulations (204), and/or, wherein the projection surface (210) comprises at least one of a seat back (211), a tray table (212), an interior wall (213), a floor (214), a door (215), a screen (216), and an overhead compartment (217) and/or, wherein the host mechanism (1230) comprises one of a passenger service unit (1232), a ceiling (1234), or a wall (213) of the aircraft (1200).

13. A method (1000) for projecting images (250) on one or more projection surfaces (218) on an aircraft (1200), the method (1000) comprising:
selecting at least one of the one or more projection surfaces (208) to display one or more of the images (250);
generating the one or more of the images (250) using a display engine (130) enclosed in a housing (110);
rotating the housing (110) about at least one axis relative to a host mechanism (1230) of the aircraft (1200) using a drive assembly (140) to direct the one or more of the images (250) on the at least one of the one or more projection surfaces (208); and
projecting the one or more of the images (250) onto the at least one of the one or more projection surfaces (208) using the display engine (130).

14. The method (1000) of Claim 13, further comprising:
detecting vibration (174) experienced by the housing (110) using a vibration sensor (172); and
compensating for the vibration (174) using the drive assembly (140).

15. The method (1000) of Claim 12 or Claim 13, further comprising detecting control manipulations (204) using an interaction sensor (220).
